Europäisches Patentamt

European Patent Office

Office européen des brevets

(19)

(11) Veröffentlichungsnummer: **0 271 813 B1**

(12) **EUROPÄISCHE PATENTSCHRIFT**

(45) Veröffentlichungstag der Patentschrift: 29.05.91

(51) Int. Cl.⁵: **C09C 1/00**, C09C 3/06, C09C 3/12

(21) Anmeldenummer: 87118195.4

(22) Anmeldetag: 09.12.87

(54) **Temperaturstabile Bismutvanadat/molybdat-Pigmente.**

(30) Priorität: 18.12.86 DE 3643247

(43) Veröffentlichungstag der Anmeldung:
22.06.88 Patentblatt 88/25

(45) Bekanntmachung des Hinweises auf die
Patenterteilung:
29.05.91 Patentblatt 91/22

(84) Benannte Vertragsstaaten:
CH DE FR GB IT LI

(56) Entgegenhaltungen:
US-A- 4 063 956

(73) Patentinhaber: **BASF Aktiengesellschaft
Carl-Bosch-Strasse 38
W-6700 Ludwigshafen(DE)**

(72) Erfinder: **Wienand, Henning, Dr.
Kornstrasse 64 a
W-6823 Neulussheim(DE)**
Erfinder: **Ostertag, Werner, Dr.
Oberer-Bergel-Weg 2
W-6718 Gruenstadt(DE)**
Erfinder: **Schwidetzky, Christoph, Dr.
Muehlweg 27
W-6703 Limburgerhof(DE)**
Erfinder: **Knittel, Helmut, Dr.
Heilbronner Strasse 66
W-7141 Ludwigsburg(DE)**

EP 0 271 813 B1

**Beschreibung**

Pigmente auf Basis Bismutvanadat/molybdat sind leuchtend gelbe Farbmittel und gelten als nicht toxisch. Ihre Herstellung ist in der EP-A 74 049 ausführlich beschrieben. Die Anwendung dieser Pigmente ist auf Anstrichmittel begrenzt, da die Temperaturstabilität von Bismutvanadat/molybdat - infolge der leichten Reduzierbarkeit des Molybdats und Vanadats durch die organische Matrix - für eine Verarbeitung im Kunststoff nicht ausreichend ist.

Es ist zwar bekannt, daß die Stabilität von Bismutvanadat/molybdat-Pigmenten durch anorganische Überzüge, z.B. durch Zirkoniumsilikat angehoben werden kann. Mit den bekannten Stabilisierungen wird jedoch nur eine Verbesserung der Licht- und Wetterechtheit und der Säurestabilität erreicht. Eine ausreichende Temperaturstabilität wird mit den Beschichtungen des Standes der Technik nicht erzielt.

Obwohl Bismutvanadat/molybdat bei 600° C gebrannt wird, wobei sich die leuchtend gelbe Farbe einstellt, gelingt es praktisch nicht das Pigment ohne Farbtonänderung in Kunststoffe einzuarbeiten. Bei den Verarbeitungstemperaturen wird das Vanadat und das Molybdat an der Oberfläche durch die Kunststoffmatrix reduziert, wodurch eine beträchtliche Vergrünung eintritt.

Es hat in der Vergangenheit Bemühungen gegeben, Pigmente auf Basis des rein monoklinen Bismutvanadats zu stabilisieren. So wird z.B. nach der US-PS 4 063 956 monoklines BiVO4 zuerst mit 0,2 bis 20 Gew.% eines wäßrigen Metalloxids belegt und dann mit einem zweiten dichten Überzug aus amorphen Siliciumdioxid (Menge: 2 bis 40 Gew.%) versehen. Für den ersten Überzug kommen Oxidhydrate von Al, Si, Ti, B, Mn, Sn, Hf, Th, Nb Zr, Ta, Zn, Mo, Ba, Sr, Ni und Sb in Betracht.

Der zweite dichte Überzug kann neben dem $SiO_2$ noch bis zu 5 Gew.% Aluminiumoxid enthalten. (Die Gew.% beziehen sich auf das zu belegende Pigment.)

Die Verfahrenstechnik der US-PS 4 063 956 ist nicht ohne weiteres auf die Bismutvanadat/molybdat-Pigmente der EP-A 74 049 übertragbar, da es sich bei dem monoklinen Bismutvanadat der US-PS um ein wäßriges Fällprodukt mit einer entsprechend aktiven Oberfläche handelt. Dem gegenüber sind die Oberflächen der Bismutvanadat/molybdat-Pigmente der EP-A 74 049 infolge des Calcinierungsvorganges bei der Herstellung weitgehend dehydratisiert und weisen daher für Auffällungsprodukte nicht mehr die notwendige Haftfestigkeit auf. Dem Fachmann ist bekannt, daß die noch mit aktiven OH-Gruppen besetzten Oberflächen frisch gefällter Pigmente zu einer starken Sorption von aufgefälltem Beschichtungsmittel fähig sind. Bei Brennprodukten fehlen diese bindungsvermittelnden OH-Gruppen fast vollständig. Man erhält daher beim Versuch, die Pigmente nach konventionellen Methoden mit einer dickeren Schicht zu belegen, meist nur lockere, flockige und nur schlecht auf der Oberfläche haftende Hüllen anstatt dichter fester Überzüge.

Dickere bzw. dichte Überzüge werden besonders zur Verbesserung der Thermostabilität von Pigmenten angestrebt. Das Problem bei der Beschichtung mit dichten, fest haftenden Überzügen wurde insbesondere bei Pigmenten auf der Basis Bleichromat untersucht und z.B. in den DE-A-18 07 890 und 18 07 891 und der EP-A 130 272 gelöst, wobei es sich in diesen Fällen jedoch um ein ganz anderes Pigmentsystem handelt. In den genannten Fällen wurde die gewünschte Thermostabilität durch Belegung der Pigmentoberfläche mit 2 bis 40 Gew.% Siliciumdioxid bzw. Hydrolyseprodukten des Magnesiumhexafluorosilikats erreicht. Zusätzlich sollen sich weitere Verbesserungen durch eine Nachbehandlung des belegten Pigmentes mit den Salzen von Harzsäuren erzielen lassen. Der entscheidende Unterschied zu dem vorliegenden Problem ist, daß es sich bei den dort beschriebenen Pigmenten - wie bei den Pigmenten der US-PS 40 63 956 - um wäßrig hergestellte Fällungsprodukte mit hydrophilen Oberflächen handelt, die relativ leicht zu beschichten sind. Ein Nachteil der Behandlung mit Salzen von Harzsäuren, z.B. das Auffällen von Colophonium in Form des Ca-Salzes sind mögliche farbliche Veränderungen des Farbtons als Folge der Eigenfarbe der Harzsäuren, z.B. des Colophoniums.

Eine Übertragung bekannter Stabilisierungsmethoden auf das System Bismutvanadat/Molybdat ist demnach nicht ohne weiteres möglich. Nach dem Stand der Technik liegen bei anorganischen Buntpigmenten bisher nur Erfahrungen zur Stabilisierung von in wäßrigem Medium hergestellten Fällungsprodukten vor.

Aufgabe der vorliegenden Erfindung war es, ein für die Einarbeitung in Kunststoff geeignetes Bismutvanadat/molybdat-Pigment bereitzustellen. Das Problem bei der Lösung der gestellten Aufgabe war das über Calcinerung hergestellte Produkt an seiner Oberfläche dergestalt zu aktivieren, daß eine gut haftende und dichte Schutzschicht aufgebracht werden kann. Toxikologisch bedenkliche Elemente, insbesondere Schwermetalle sollten nicht Bestandteil der Schutzschicht sein.

Es wurde gefunden, daß man in den anwendungstechnischen Eigenschaften verbesserte Bismutvanadat/molybdat-Pigmente erhält, wenn man auf das durch Calcinieren erhaltene Pigment der Formel

$$Bi\ VO_4 \cdot n\ Bi_2\ Mo\ O_6,$$

2

in der n = 0,2 bis 2,5 ist,

a) in wäßriger Suspension bei Temperaturen von 70 bis 100°C bei pH 4 bis 8,5 mit einer Alkalimetallsilikatlösung oder bei pH 5,5 bis 9,5 mit einer Magnesiumhexafluorsilikatlösung eine erste SiO2 enthaltende Schicht auffällt,

b) die Suspension mindestens 1 Stunde bei 70 bis 100°C hält,

c) dann die Suspension entweder bei pH 4 bis 8,5 mit weiterer Alkalimetallsilikatlösung oder bei pH 5,5 bis 9,5 mit weiterer Magnesiumhexafluorsilikatlösung oder bei pH 4,5 bis 9,5 mit einem Gemisch aus Alkalimetallsilikat- und Magnesiumhexafluorsilikatlösung versetzt,

d) das erhaltene Gemisch bei Temperaturen von 70 bis 100°C durchmischt bis eine dichte zweite Schicht auf dem Pigment augfgefällt ist,

e) dem Gemisch anschließend eine Emulsion/Dispersion eines Polyethylenwachses und/oder eines oxidierten Polyethylenwachses zufügt und das Wachs auf dem Pigment abscheidet

mit der Maßgabe, daß die erste Schicht, bezogen auf das Pigment 1 bis 10 % SiO2 enthält und die zweite Schicht, jeweils bezogen auf das beschichtete Pigment, einen Si-Gehalt von 2 bis 25 % und gegebenenfalls einen Mg-Gehalt von 0,5 bis 10 % und einen F-Gehalt von 0,3 bis 20 % aufweist und das Pigment mit 2 bis 40 Gew.-% Wachs, bezogen auf das beschichtete Pigment belegt ist.

Die nach dem Verfahren gemäß der Erfindung erhaltenen Bismutvanadat/molybdat-Pigmente weisen im Vergleich zu dem Ausgangspigment in Kunststoffen eine deutlich verbesserte thermische Beständigkeit bei sonst gleichen anwendungstechnischen Eigenschaften auf.

Für die überlegene thermische Beständigkeit ist sowohl die Belegung mit den Siliciumdioxid enthaltenden Schichten wie auch die organische Belegung (Imprägnierung mit Wachs) wesentlich. Dies war nicht zu erwarten, da bekannt ist, daß eine Reihe von Substanzen zerstörend auf abgeschiedene Siliciumdioxidschichten wirken (K. Iler, The Chemistry of Silicon, 1979, S. 430, John Wiley & Sons).

Das Verfahren wird in der Regel so durchgeführt, daß man zunächst auf dem durch Calcinierung gewonnenem Pigment eine dünne Schicht aus SiO2 oder aus Hydrolyseprodukten des Magnesiumhexafluorosilikats abscheide (1. Schicht; Vorbeschichtung). Das so mit der 1. Schicht versehene Pigment wird dann in wäßriger Suspension in der Wärme gehalten, damit Fehlstellen im dünnen Überzug ausheilen und die Abscheidung vollständig wird.

Das so mit der 1. Schicht überzogene Pigment wird dann bei 70 bis 100°C mit einer dicken und dichten Schicht aus SiO2 und/oder Hydrolyseprodukten des Magensiumhexafluorosilikat belegt (Schicht 2, Hauptbeschichtung).

Daran anschließend wird das Pigment mit einem Wachs in bekannte Weise belegt, in üblicher Weise isoliert, z.B. durch Absaugen oder Zentrifugieren, getrocknet und zu Pulver gemahlen.

Als Ausgangsstoff dienen nach dem in der EP-A 74 049 beschriebenen Verfahren hergestellte Bismutvanadat/molybdat-Pigmente der Formel

$$Bi\ VO_4 \cdot n\ Bi_2\ Mo\ O_6 \quad (I),$$

in der n 0,2 bis 2,5 ist.

Zur Vorbeschichtung wird (I) in Wasser dispergiert und der Suspension Natriumsilikatlösung oder Magnesiumhexafluorosilikat zugegeben. Die Suspension wird dann auf pH 4 bis 8,5, bzw. 5,5 bis 9,5 gestellt.

Die Menge an Natriumsilikat bzw. Magnesiumhexafluorosilikat sollte so bemessen sein, daß die daraus gebildete SiO2-Menge zwischen 1 und 10 Gew.%, bezogen auf (I), liegt. Vorzugsweise liegen die zur Vorbeschichtung verwendeten Mengen an Alkalimetallsilikat bzw. Magnesiumhexafluorosilikat so, daß (I) mit 2 bis 5 Gew.% SiO2 belegt wird.

Vorzugsweise erfolgt die Vorbeschichtung unter Naßmahlbedingungen, d.h. (I) wird in Form einer Suspension in einem Naßmahlaggregat in Gegenwart von Natriumsilikat oder Magnesiumhexafluorosilikat gemahlen. Insbesondere erfolgt die Vorbeschichtung im Rahmen der bei Brennprodukten üblichen Desagglomerationsmahlung (Naßmahlung). Die hierbei mit dünnen Schichten belegten Pigmente werden bei 70 bis 100°C in der SiO2-enthaltenden Suspension gehalten, wobei die 1. Schicht in ihrer Homogenität und den haftvermittelnden Eigenschaften verbessert wird.

Diese Temperaturbehandlung sollte mindestens 1 Stunde dauern, vorzugsweise dauert diese - je nach der Temperatur - 8 bis 10 Stunden.

Durch Messung der zeta-Potentiale konnte gezeigt werden, daß bei der so durchgeführten Erstbeschichtung eine vollständige Belegung der Pigmentoberfläche erfolgt.

Die Qualität der erfindungsgemäßen Verfahrensprodukte kann weiter verbessert werden, wenn man die mit der 1. Schicht belegten Pigmente am Ende der Belegungs- und Reifungsphase zusätzlich einer schonenden Naßmahlung unterzieht.

Darüber hinaus kann die Qualität der erfindungsgemäß hergestellten Pigmente verbessert werden, wenn man die mit der 1. Schicht belegten Pigmente nach der Belegungs- und Reifungsphase isoliert, zwischen 80 und 120°C trocknet und anschließend einer schonenden Trockenmahlung unterwirft, z.B. in einer Stiftmühle oder in einer Zentrifugalmühle.

Eine weitere Variante des erfindungsgemäßen Verfahrens besteht darin, daß man nach der Vorbeschichtung und Reifung der 1. Beschichtung, gegebenenfalls nach den im vorangehenden Absatz beschriebenen Maßnahmen: Isolieren, Trocknen und schonendem Mahlen zusätzlich eine Haftvermittlungsschicht aus einer organischen Siliciumverbindung aufbringt. Hierzu wird die wäßrige Suspension, gegebenenfalls nach kurzem Naßmahlen, mit einer Lösung eines organischen Silans in Wasser versetzt. Durch Erwärmen auf 40 bis 100°C, vorzugsweise von 40 bis 90°C wird das Silan hydrolysiert. Dabei scheiden sich die Hydrolyseprodukte als dünner Film auf der 1. Schicht ab. Durch Wahl eines geeigneten Silans kann so eine Oberfläche mit verbesserter Akitivität für die folgende Hauptbelegung geschaffen werden. Bevorzugt sind im vorliegenden Fall Silane die mindestens eine Aminogruppe enthalten, z.B. gamma-Aminopropyltrimethoxysilan, gamma-Aminopropyl-triethoxysilan, N-Aminoethyl-3-aminopropyltrimethoxysilan oder Gemische davon.

Anschließend erfolgt die eigentliche Belegung von (I) mit $SiO_2$ und/oder Hydrolyseprodukten des Magnesiumhexafluorosilikats (Hauptbeschichtungsphase). Um zusammenhängende Beschichtungen in zuverlässiger und gut reproduzierbarer Weise aufzubringen, geht man vorteilhafterweise so vor, daß die wäßrige Suspension des vorbeschichteten (I) mit einer wäßrigen Lösung von Alkalimetallsilikat, z.B. Wasserglas versetzt wird und anschließend mit Säure ein pH von 4 bis 8,5, vorzugsweise von 5,5 bis 7,5 eingestellt wird. Anstelle des Alkalimetallsilikats kann auch eine Lösung von Magnesiumhexafluorosilikat verwendet werden. Die Suspension wird in diesem Fall mit Alkalilauge auf pH-Werte von 5,5 bis 9,5 eingestellt. Man kann auch die basische Alkalisilikatlösung mit der sauren Magnesiumhexafluorosilikatlösung oder mit Mischungen aus dem Fluorosilikat und Säure zum Einstellen den gewünschten pH-Wert verwenden. Bei der Fällung liegt die Temperatur im Bereich von 70 bis 100°C, vorzugsweise im Bereich von 70 bis 90°C.

Eine Variante zum Aufbringen der Hauptbeschichtung besteht darin, daß man zu der Suspension des vorbeschichteten (I) bei einem konstanten pH im Bereich von 5 bis 9,0 gleichzeitig eine Alkalimetallsilikatlösung und eine Lösung von Magnesiumhexafluorosilikat zudosiert. Hierbei erhält man bei Einhalten eines konstanten pH-Wertes und gleichmäßigem Zulauf beider Komponenten sehr homogene Beschichtungen, weshalb diese Variante besonders bevorzugt ist.

Die Dauer für die zweite Beschichtung liegt in der Regel zwischen 30 und 240 min, vorzugsweise zwischen 60 und 120 min.

Die Menge der aufgebrachten siliciumhaltigen Beschichtung ist abhängig von der freien Oberfläche von (I). Im allgemeinen weisen die Pigmente eine BET-Oberfläche von 3 bis 15 $m^2/g$ auf. Die gewünschte Temperaturstabilität wird erzielt, wenn die Beschichtung einen Mg-Gehalt von 0,5 bis 10 %, einen Si-Gehalt von 2 bis 25 % und einen F-Gehalt von 0,3 bis 20 %, bezogen auf das beschichtete Pigment, enthalten.

Anschließend wird das beschichtete (I) mit Wachs belegt. Hierzu wird die wäßrige Suspension mit einer Wachsemulsion/dispersion versetzt und das Gemisch bei 40 bis 100°C, vorzugsweise bei 70 bis 90°C gerührt. Vorteilhafterweise wird das Wachs durch Zugeben von Elektrolyten wie Calcium-, Zink- oder Magnesiumsalzen auf das beschichtete Pigment aufgefällt.

Das fertige Pigment wird dann aus der wäßrigen Suspension isoliert, gewaschen und getrocknet.

Als Wachse für die Endbelegung kommen z.B. Polyethylenwachse, oxidierte Polyethylenwachse (sog. OA-Wachse), mit Molekulargewichten zwischen 1000 und 10 000, insbesondere zwischen 2 500 und 7 000 in Betracht.

Die Wachse werden vorzugsweise in Form von wäßrigen Emulsionen oder Dispersionen angewendet. Die Menge an den Wachsen wird im allgemeinen so bemessen, daß das Pigment - bezogen auf das fertige Pigment - mit 2 bis 40 Gew.%, vorzugsweise mit 5 bis 20 Gew.% Wachs belegt ist.

Das Verfahren soll durch die folgenden Ausführungsbeispiele weiter erläutert werden. Die Prozente beziehen sich auf das Gewicht.

I. Prüfung der thermischen Stabilität

Ia) Zur Prüfung der thermischen Stabilität wurden die Verfahrensprodukte in einem Extruder in ein Acrylnitril-Butadien-styrol-Copolymer eingearbeitet und dann in einer Schneckenspritzgußmaschine auf Testtemperaturen von 220 bis 300° C erwärmt und 5 Min. bei dieser Temperatur gehalten und danach zu Platten gespritzt. Der bei 220° C erhaltene Spritzling dient als Vergleich.

Ib) Es wird wie unter Ia) geprüft, jedoch wird als Polymer HD-Polyethylen verwendet.

Ic) Die nach Ia) bzw. Ib) erhaltenen Platten werden photometrisch vermessen und die Meßwerte farbmetrisch ausgewertet und daraus der Farbabstand ΔE zwischen Schwarz (X = Y = Z = 0) und den Farborten von Probe und Vergleich nach DIN 6174 berechnet.

Als Maß für die thermische Stabilität wird die Differenz ΔE' aus $\Delta E_{Vergleich}$ und $\Delta E_{Probe}$ verwendet:

$$E\Delta_{Vergleich} - E\Delta_{Probe} = \Delta E'.$$

II. Ausführungsbeispiele

Beispiel 1

1.1 Pigmentsuspension

4626,8 g einer wäßrigen Pigmentsuspension, die 300 g Pigment $BiVO_4 \cdot n\, Bi_2MoO_6$ (n = 0,75) enthält, werden unter Zusatz von 40,1 g einer Natronwasserglaslösung (enthält 30 % $SiO_2$ und 8 % $Na_2O$) in 30 min. durch eine Perlmühle (Dyno®-Mill; Umdrehungsgeschwindigkeit: 15 m/sec; Ringspaltöffnung: 0,1 mm) gefahren. Die so erhaltene Suspension wird in einen 6 l-Rührkolben gegeben und unter Rühren auf 95° C geheizt. Bei dieser Temperatur gibt man zu der Pigmentsuspension über einen Zeitraum von 60 min. eine Lösung von 76,6 g Na-Wasserglas in 325 g Wasser. Durch gleichzeitige Zugabe einer 10 %igen wäßrigen $MgSiF_6$-Lösung wird der pH-Wert während des Zulaufs in der Suspension konstant bei pH 8,5 gehalten. Insgesamt sind hierzu 97,9 g der $MgSiF_6$-Lösung erforderlich. Anschließend wird das Gemisch 15 min. bei 95° C und pH 8,5 nachgerührt. Die Suspension des beschichteten Pigments wird anschließend in drei Teile aufgeteilt und in der unter 1.2 bis 1.4 angegebenen Weise belegt.

1.2 Beschichtung mit Wachs

1542,2 g der Pigmentsuspension 1.1 werden bei Raumtemperatur mit 270 g einer 0,8 %igen Emulsion eines Polyethylenwachses (Poligen® WE1) versetzt und 30 min bei 400 U/min. gerührt. Der pH-Wert liegt bei 10,0. Dann wird bei Raumtemperatur eine Lösung aus 20,9 g $CaCl_2 \cdot 6\, H_2O$ und 62,5 g $H_2O$ in 30 min. zugegeben. Der pH-Wert liegt dann bei 8,5. Nun wird die Suspension in 40 min. auf 100° C hochgeheizt, wobei sich ein pH-Wert von 7,0 einstellt, 30 min. bei 100° C nachgerührt, das Pigment abgesaugt, gewaschen und getrocknet.

Analyse der Beschichtung:

Mg = 0,41 %, Ca = 2,5 %, Si = 4,2 %.

1.3 Beschichtung mit oxidiertem PE-Wachs

868,9 g der Pigmentsuspension 1.1 werden mit 100 g einer 15 %igen Emulsion von oxidiertem PE-Wachs versetzt und bei Raumtemperatur mit 400 U/min gerührt. Der pH-Wert beträgt 6,9. Innerhalb von 30 min. wird eine $CaCl_2$-Lösung aus 11,8 g $CaCl_2 \cdot 6\, H_2O$ und 35,2 g $H_2O$ bei Raumtemperatur in die Suspension getropft, wodurch der pH-Wert auf 8,9 steigt. Die Suspension wird auf 100° C aufgeheizt und 30 min. bei dieser Temperatur gerührt; dann wird abgesaugt und getrocknet.

Analyse der Beschichtung:

Mg = 0,35 %, Ca = 2,6 %, Si = 4,1 %.

1.4 Beschichtung mit Kolophonium/Ca-Salz (Vergleichsversuch)

1542,2 g der Pigmentsuspension 1.1 werden auf 95° C erwärmt, der pH-Wert beträgt 8,7. Innerhalb von 30 min. wird eine Kolophoniumlösung, aus 26,63 g Kolophonium, 3,6 g NaOH und 241,3 g $H_2O$ zugegeben.

5

Nach dem Zulauf der Kolophoniumlösung wird auf 100°C erwärmt, der pH beträgt 9,2. Anschließend wird innerhalb von 30 min. eine Lösung von 20,9 g $CaCl_2$ • 6 $H_2O$ in 62,5 g $H_2O$ zugetropft. Der pH-Wert beträgt jetzt 7,6. Die Suspension wird bei 95 bis 100°C 30 min. nachgerührt. Danach wird das Pigment filtriert, gewaschen und bei 90°C getrocknet.

Analyse der Beschichtung:

Mg = 0,2 %, Ca = 1,8 %, Si = 0,42 %.

1.5 Prüfung der Pigmente

Die nach 1.2 bis 1.3 erhaltenen Pigmente und das unbeschichtete Ausgangspigment werden nach Ia) in das ABS-Polymere eingearbeitet und getestet. Die erhaltenen Platten wurden nach Ib) ausgewertet. Die ermittelten $\Delta E'$-Werte sind in der Tabelle 1 zusammengestellt.

**Tabelle 1**

| $\Delta E'$ | Temperatur [°C] | | | | |
|---|---|---|---|---|---|
| (Vergleich) | 220 | 240 | 260 | 280 | 300 |
| Ausgangspigment (unbeschichtet) | 0 | 6,9 | 19,6 | 35,1 | 52,6 |
| Pigment aus 1.4 | 0 | 3,4 | 7,8 | 13,5 | 19,0 |
| Pigment aus 1.2 | 0 | 1,5 | 4,2 | 7,9 | 14,8 |
| Pigment aus 1.3 | 0 | 3,2 | 5,5 | 9,3 | 14,2 |

Die Farbtondifferenzen zwischen Färbungen mit dem mit Kolophonium/Ca-Salz beschichteten und dem mit Wachs belegten Pigment sind in der Tabelle 2 zusammengestellt.

**Tabelle 2**

**Farbtonunterschiede in $\Delta E$-Werten (Cielab) Vergleich zwischen dem mit Kolophonium/Ca-Salz und dem Wachs belegten Pigmenten**

| $\Delta E'$ | Temperatur [°C] | | | | |
|---|---|---|---|---|---|
| (Vergleich) | 220 | 240 | 260 | 280 | 300 |
| Pigment aus 1.4 | 10,9 | 12,6 | 14,6 | 17,1 | 18,9[1] |
| Pigment aus 1.2 | 0 | 0 | 0 | 0 | 0 |

[1] grüner, trüber

Nach der visuellen coloristischen Beurteilung ist die Färbung mit dem Pigment aus 1.2 deutlich gelber und reiner.

Beispiel 2

2.1 Pigmentsuspension

2780 g einer wäßrigen Pigmentsuspension, die 180 g $BiVO_4$ $\cdot$ 0,75 $Bi_2MoO_6$ enthält, werden nach der Zugabe von 20 g $MgSiF_6$ $\cdot$ 6 $H_2O$ wie unter 1.1 angegeben, in der Perlmühle gemahlen. Die erhaltene Suspension wird anschließend durch Entnahme von 1000 g $H_2O$ auf einen Pigmentgehalt von 10 % konzentriert und auf 95°C erwärmt. Durch Zugeben von 375 ml 20 %iger Natronwasserglaslösung wird der pH-Wert von vorher pH 1,1 auf pH 8,5 angehoben. Anschließend werden bei 95°C über einen Zeitraum von 60 min. 145,5 g Natronwasserglas (30 % $SiO_2$, 8 % $Na_2O$) gelöst in 617,5 g Wasser zugetropft und der pH-Wert durch gleichzeitige Zugabe von insgesamt 96,5 g einer 10 %igen $MgSiF_6$-Lösung bei pH 8,5 konstant gehalten. Nach beendeter Zugabe wird noch 30 min. nachgerührt, dann mit 620 g $H_2O$ verdünnt und das Reaktionsgemisch in drei Teile von jeweils 1215 g Suspension aufgeteilt. Diese drei Teile werden, wie nachfolgend beschrieben, mit einer organischen Beschichtung versehen.

2.2 Beschichtung mit Wachs

1215 g der nach 2.1 erhaltenen Suspension werden bei 100°C (pH 8,5) in 30 min mit 45,1 g einer PE-Wachsemulsion (35 %ig) in 115,9 g $H_2O$ versetzt. Das Wachs wird dann durch Zugeben einer 25,1 %igen $CaCl_2$-Lösung (12,4 g $CaCl_2$ $\cdot$ 6 $H_2O$ in 37,1 g $H_2O$) (Dauer: 30 min.) gefällt. Nach weiteren 30 min. bei 100°C wird das Pigment abgesaugt und bei 80°C getrocknet.

2.3 Beschichtung mit oxidiertem PE-Wachs

1215 g der nach 2.1 erhaltenen Suspension werden bei 100°C und einem Anfangs-pH-Wert von 8,5 in 30 min. mit einer oxidiertes PE-Wachs enthaltenden Emulsion (52,6 g 30 %ig) in 52,6 $H_2O$ versetzt. Der pH-Wert beträgt 8,3 bei 100°C. Dann wird das Wachs durch Zugeben einer Lösung von 12,4 g $CaCl_2$ $\cdot$ 6 $H_2O$ in 37,1 g $H_2O$ bei 100°C (Dauer: 30 min.) ausgefällt. Nach weiteren 30 min. bei 100°C wird abgesaugt und das Pigment getrocknet.

2.4 Beschichtung mit Kolophonium/Ca-Salz

1215 g der unter 2 beschriebenen Suspension werden bei 100°C und dem Anfangs-pH-Wert von 8,5 in 30 min. mit einer 9,8 %igen Kolophoniumlösung (16,9 g Kolophoniumwurzelharz und 2,28 g NaOH fest in 152,7 g $H_2O$) versetzt. Das Kolophonium wird dann durch Zugabe einer 25,1 %igen $CaCl_2$-Lösung (12,4 g $CaCl_2$ $\cdot$ 6 $H_2O$ in 37,1 g $H_2O$) in 30 min. ausgefällt. Nach weiteren 30 min. bei 100°C wird das Pigment abgesaugt und getrocknet.

2.5 Prüfung der Pigmente

Die nach 2.2 bis 2.4 erhaltenen Pigmente werden in das in 1.5 angegebene Polymere eingearbeitet (2 %) und jeweils 5 min. im Temperaturbereich von 220 bis 280°C getestet. In der Tabelle 3 sind die gemessenen Farbänderungen als $\Delta E$-Werte (bestimmt nach Cielab) angegeben.

| $\Delta E$ | Temperatur [°C] | | | |
|---|---|---|---|---|
| | 220 | 240 | 260 | 280 |
| (Vergleich) | | | | |
| Pigment aus 2.4 | 0 | 2,6 | 6,5 | 13,2 |
| Pigment aus 2.2 | 0 | 2,0 | 5,2 | 8,5 |
| Pigment aus 2.3 | 0 | 2,0 | 5,5 | 12,1 |

Beispiel 3

3.1 Pigmentsuspension

100 g Pigment $BiVO_4$ • n $Bi_2MoO_6$ (n = 0.75) werden in 1000 g $H_2O$ suspendiert und auf 95°C aufgeheizt. Anschließend wird der pH-Wert durch Zugabe von 25 g 20 %iger Natronlauge auf pH 8,5 eingestellt. Dann werden innerhalb 60 min. 401,6 g einer 19,1 %igen Natronwasserglaslösung (76,6 g Natronwasserglas in 325 g $H_2O$) zugetropft und der pH-Wert während dieser Zeit durch gleichzeitiges Zugeben von 95,3 g einer 10 %igen $MgSiF_6$-Lösung konstant auf pH 8,5 gehalten.

3.2 Beschichtung mit PE-Wachs

Die nach 3.1 erhaltene Suspension wird bei 100°C mit 76,1 g einer 35 %igen PE-Wachs-Emulsion in 195,4 g $H_2O$ versetzt (pH 8,4 bei 100°C). Anschließend wird eine Lösung aus 20,9 g $CaCl_2$ • 6 $H_2O$ und 62,6 g in die Suspension getropft, und 30 min. bei 100°C gehalten. Das Pigment wird abgesaugt und getrocknet.

3.3 Beschichtung mit oxidiertem PE-Wachs

Eine nach 3.1 hergestellte Suspension wird bei 100°C während eines Zeitraums von 30 min mit 88,8 g einer 30 %igen Emulsion von oxidiertem PE-Wachs in 88,8 g $H_2O$ versetzt. Der pH beträgt danach 8.1. Anschließend wird eine Lösung aus 20,9 g $CaCl_2$ • 6 $H_2O$ in 62,5 g $H_2O$ während 30 min. zugetropft. Der pH-Wert liegt jetzt bei 7,8 (100°C). Das Pigment wird dann abgesaugt und getrocknet.

3.4 Prüfung der Pigmente

Die Wärmestabilität der nach 3.2 und 3.3 erhaltenen Pigmente wird nach Ia) bestimmt und die Färbungen nach Ic) ausgewertet. In der Tabelle 4 sind die Ergebnisse, vergleichend zu den Versuchen 2.2 und 2.3, aufgeführt.

Tabelle 4

| $\Delta E'$ | Temperatur [°C] | | | |
|---|---|---|---|---|
| | 220 | 240 | 260 | 280 |
| | (Vergleich) | | | |
| Pigment aus 3.2 | 0 | 3,3 | 7,9 | 12,5 |
| Pigment aus 2.2 | 0 | 2,0 | 5,2 | 8,5 |
| Pigment aus 3.3 | 0 | 4,3 | 7,6 | 17,0 |
| Pigment aus 2.3 | 0 | 2,0 | 5,5 | 12,1 |

Beispiel 4

4.1 Pigmentsuspension

2500 g einer wäßrigen Suspension, die 300 g $BiVO_4$ • n $Bi_2MoO_6$ (n = 0.75) enthält, werden in 30 min. durch eine Perlmühle (Dyno-Mill, Umdrehungsgeschwindigkeit: 15 m/sec; Ringöffnung: 0,1 mm) gefahren.

Die Suspension wird in einen 4 l Rührkolben überführt und unter Rühren auf 95°C erhitzt. In die Suspension wird bei 90°C eine Lösung aus 90 g Wasserglas in 900 ml $H_2O$ gegeben. Anschließend wird der pH-Wert im Verlauf von 2 h durch Zugeben 233 g 6 %iger $HNO_3$ auf einen Wert von 6,4 gesenkt. Die Suspension wird 2 h bei 90°C nachgerührt, das vorbeschichtete Produkt abfiltriert, gewaschen und getrocknet. Daran anschließend wird das Pigment in einer Zentrifugalmühle gemahlen. 125 g des so vorbeschichteten Pigmentes werden in 875 g $H_2O$ mit einem Dispergator (Ultra Turax® der Fa. Jahnke und Kunkel, Freiburg) dispergiert. Zu der Suspension wird eine Lösung von 7,5 g gamma-Aminopropyltriethoxysilan in 125 g $H_2O$ innerhalb von 10 min. zugefügt. Die Suspension wird mit 53 g 6 %iger $HNO_3$ neutral gestellt und dann auf 100°C erhitzt. Bei dieser Temperatur wird 30 min. nachgerührt und dann eine Lösung von 83 g Natronwasserglas (26 %ig) in 700 g $H_2O$ innerhalb von 30 min. zugefügt. Dann wird der pH-Wert der Suspension durch Zugabe von 415 g 6 %iger $HNO_3$ im Verlauf von 3 h abgesenkt. Die Suspension wird 2 h bei 100°C nachgerührt, das Pigment abgesaugt und getrocknet.

## 4.2 Beschichtung mit Polyethylenwachs

Die nach 4.1 erhaltene Suspension wird bei 100°C mit 76,1 g einer 35 %igen Emulsion von PE-Wachs in 195,4 g $H_2O$ versetzt (pH 8,4 bei 100°C). Anschließend wird eine Lösung aus 20,9 g $CaCl_2 \cdot 6\,H_2O$ und 62,5 g $H_2O$ in die Suspension getropft. Nach 30 min. bei 100°C wird das Pigment abgesaugt und getrocknet.

## 4.3 Beschichtung mit Kolophonium/Ca-Salz

Die nach 4.1 erhaltene Suspension wird bei 100°C (pH-Wert: 8,5) in 30 min. mit einer Lösung aus 26,6 g Kolophoniumwurzelharz, 3,60 g NaOH fest und 250,0 g $H_2O$ versetzt. Dann wird das Kolophonium durch Zugabe einer Lösung aus 20,9 g $CaCl_2 \cdot 6\,H_2O$ in 60,0 g $H_2O$ in 30 min. ausgefällt. Nach weiteren 30 min bei 100°C wird das Pigment abgesaugt und getrocknet.

## 4.4 Prüfung der Pigmente

Die nach 4.1 bis 4.3 erhaltenen Pigmente werden in ABS-Polymeren nach Ia) auf Wärmestabilität geprüft und die Färbungen nach Ic) ausgewertet. In der folgenden Tabelle 5 sind die gemessenen $\Delta E$-Werte wiedergegeben.

### Tabelle 5

| $\Delta E'$ | Temperatur [°C] | | | |
|---|---|---|---|---|
| | 220 | 240 | 260 | 280 |
| (Vergleich) | | | | |
| Pigment aus 4.1 (ohne Imprägnierung) | 0 | 2,2 | 5,8 | 12,3 |
| Pigment aus 4.3 (mit Kolophinium) | 0 | 1,7 | 3,5 | 8,7 |
| Pigment aus 4.2 (mit PE-Wachs) | 0 | 1,5 | 4,1 | 8,0 |

## Ansprüche

1. Verfahren zur Herstellung eines in den anwendungstechnischen Eigenschaften verbesserten Bismutvanadat/molybdat-Pigments, dadurch gekennzeichnet, daß man auf das durch Calcinieren erhaltene Pigment der Formel

Bi VO₄ · n Bi₂ Mo O₆

in der n = 0,2 bis 2,5 ist,
   a) in wäßriger Suspension bei Temperaturen von 70 bis 100°C bei pH 4 bis 8,5 mit einer Alkalimetallsilikatlösung oder bei pH 5,5 bis 9,5 mit einer Magnesiumhexafluorsilikatlösung eine erste SiO₂ enthaltende Schicht auffällt,
   b) die Suspension mindestens 1 Stunde bei 70 bis 100°C hält,
   c) dann die Suspension entweder bei pH 4 bis 8,5 mit weiterer Alkalimetallsilikatlösung oder bei pH 5,5 bis 9,5 mit weiterer Magnesiumhexafluorsilikatlösung oder bei pH 4,5 bis 9,5 mit einem Gemisch aus Alkalimetallsilikat- und Magnesiumhexafluorsilikatlösung versetzt,
   d) das erhaltene Gemisch bei Temperaturen von 70 bis 100°C durchmischt bis eine dichte zweite Schicht auf dem Pigment aufgefällt ist,
   e) dem Gemisch anschließend eine Emulsion/Dispersion eines Polyethylenwachses und/oder eines oxidierten Polyethylenwachses zufügt und das Wachs auf dem Pigment abscheidet mit der Maßgabe, daß die erste Schicht,bezogen auf das Pigment 1 bis 10 % SiO₂ enthält und die zweite Schicht, jeweils bezogen auf das beschichtete Pigment, einen Si-Gehalt von 2 bis 25 % und gegebenenfalls einen Mg-Gehalt von 0,5 bis 10 % und einen F-Gehalt von 0,3 bis 20 % aufweist und das Pigment mit 2 bis 40 Gew.-% Wachs, bezogen auf das beschichtete Pigment belegt ist.

2. Verfahren gemäß Anspruch 1, dadurch gekennzeichnet, daß man die erste SiO₂-Schicht auf dem Pigment durch Zugeben von Natriumsilikatlösung bei pH 5,5 bis 7,5 oder durch Zugeben von Magnesiumhexafluorosilikatlösung bei pH 6,5 bis 8.5 erzeugt.

3. Verfahren gemäß Anspruch 1 oder 2, dadurch gekennzeichnet, daß die erste SiO₂-Schicht unter Naßmahlbedingungen auf dem Pigment aufgefällt wird.

4. Verfahren gemäß den Ansprüchen 1 bis 3, dadurch gekennzeichnet, daß man nach dem Auffällen der ersten SiO₂-haltigen Schicht das Pigment isoliert, trocknet und mahlt.

5. Verfahren gemäß den Ansprüchen 1 bis 3, dadurch gekennzeichnet, daß man nach dem Auffällen der ersten SiO₂-enthaltenden Schicht das Pigment in der wäßrigen Suspension mit organischen Silanen belegt.

6. Verfahren gemäß Anspruch 4, dadurch gekennzeichnet, daß das gemahlene Pigment in wäßriger Suspension mit organischen Silanen belegt wird.

7. Verfahren gemäß Anspruch 5 oder 6, dadurch gekennzeichnet, daß die Oberfläche mit polaren organischen Silanen belegt wird.

8. Verfahren gemäß Anspruch 7, dadurch gekennzeichnet, daß man Silane mit mindestens einer Aminogruppe verwendet.

## Claims

1. A process for preparing a bismuth vanadate/molybdate pigment having improved application properties, which comprises
   a) precipitating in aqueous suspension at 70-100°C onto the pigment obtained by calcination and having the formula

Bi VO₄ · n Bi₂ Mo O₆

where n is 0.2-2.5, a first SiO₂-containing layer from an alkali metal silicate solution at pH 4-8.5 or from a magnesium hexafluorosilicate solution at pH 5.5-9.5,

b) maintaining the suspension at 70-100° C for not less than 1 hour,

c) then adding to the suspension either at pH 4-8.5 further alkali metal silicate solution or at pH 5.5-9.5 further magnesium hexafluorosilicate solution or at pH 4.5-9.5 a mixture of alkali metal silicate solution and magnesium hexafluorosilicate solution,

d) thoroughly mixing the resulting mixture at 70-100° C until a dense coating has been precipitated on the pigment,

e) then adding to the mixture a polyethylene wax emulsion/dispersion and/or an oxidized polyethylene wax, and depositing the wax on the pigment with the proviso that the first layer contain 1-10% of $SiO_2$, based on the pigment, and the second layer have an Si content of 2-25% and optionally an Mg content of 0.5-10% and an F content of 0.3-20%, based in each case on the coated pigment, and the pigment have been coated with 2-40% of wax, based on the weight of the coated pigment.

2. A process as claimed in claim 1, wherein the first $SiO_2$ layer on the pigment is produced by adding sodium silicate solution at pH 5.5-7.5 or by adding magnesium hexafluorosilicate solution at pH 6.5-8.5.

3. A process as claimed in claim 1 or 2, wherein the first $SiO_2$ layer is precipitated onto the pigment under wet grind conditions.

4. A process as claimed in claim 1 or 2 or 3, wherein, after the first $SiO_2$-containing layer has been precipitated on, the pigment is isolated, dried and ground.

5. A process as claimed in claim 1 or 2 or 3, wherein, after the first $SiO_2$-containing layer has been precipitated on, the pigment is coated in the aqueous suspension with an organic silane.

6. A process as claimed in claim 4, wherein the ground pigment is coated in aqueous suspension with an organic silane.

7. A process as claimed in claim 5 or 6, wherein the surface is coated with a polar organic silane.

8. A process as claimed in claim 7, wherein the silane used has one or more amino groups.


**Revendications**

1. Procédé de préparation d'un pigment à base de vanadate/molybdate de bismuth amélioré dans ses Propriétés d'application technique, caractérisé en ce que

a) on dépose, sur le pigment de formule suivante, obtenu par calcination

Bi VO₄ • n Bi₂ Mo O₆

dans laquelle n = 0,2 à 2,5,

en suspension aqueuse, à une température de 70 à 100° C, à un pH de 4 à 8,5 avec une solution de silicate de métal alcalin ou à un pH de 5,5 à 9,5 avec une solution d'hexafluorosilicate de magnésium, une première couche contenant du $SiO_2$,

b) on maintient la suspension pendant 1 h au moins à une température de 70 à 100° C,

c) puis on mélange la suspension, soit à un pH de 4 à 8,5 avec une quantité supplémentaire de solution de silicate de métal alcalin, soit à un pH de 5,5 à 9,5 avec une quantité supplémentaire de solution d'hexafluorosilicate de magnésium, soit à un pH de 4,5 à 9,5 avec un mélange de solutions de silicate de métal alcalin et d'hexafluorosilicate de magnésium,

d) on mélange intimement le mélange obtenu à une température de 70 à 100° C jusqu'à ce qu'une seconde couche dense soit déposée sur le pigment,

e) on ajoute ensuite au mélange une émulsion/dispersion d'une cire de polyéthylène et/ou d'une cire de polyéthylène oxydé et on dépose la cire sur le pigment, étant spécifié que la première couche contient de 1 à 10% de $SiO_2$ par rapport au pigment, que la seconde couche présente, par rapport au pigment enduit, une teneur en Si de 2 à 25% et éventuellement une teneur en Mg de 0,5 à 10% et une teneur en F de 0,3 à 20%, et que le pigment est revêtu de 2 à 40% en poids de cire par rapport au pigment enduit.

2. Procédé selon la revendication 1, caractérisé en ce qu'on produit la première couche de $SiO_2$ sur le pigment par addition de solution de silicate de sodium à un pH de 5,5 à 7,5 ou par addition de solution d'hexafluorosilicate de magnésium à un pH de 6,5 à 8,5.

3. Procédé selon la revendication 1 ou 2, caractérisé en ce qu'on dépose sur le pigment la première couche de $SiO_2$ dans des conditions de broyage humide.

4. Procédé selon l'une quelconque des revendications 1 à 3, caractérisé en ce qu'après le dépôt de la première couche contenant du $SiO_2$, on isole le pigment, on le sèche et on le broie.

5. Procédé selon l'une quelconque des revendications 1 à 3, caractérisé en ce qu'après le dépôt de la première couche contenant du $SiO_2$, on revêt de silanes organiques le pigment en suspension aqueuse.

6. Procédé selon la revendication 4, caractérisé en ce qu'on revêt de silanes organiques le pigment broyé en suspension aqueuse.

7. Procédé selon la revendication 5 ou 6, caractérisé en ce que la surface est revêtue de silanes organiques polaires.

8. Procédé selon la revendication 7, caractérisé en ce qu'on utilise des silanes renfermant au moins un groupement amino.